# EUROPÄISCHE PATENTANMELDUNG

(11) **EP 4 730 597 A1**
(43) Veröffentlichungstag der Anmeldung: **22.04.2026**
(21) Anmeldenummer: 25202465.8
(22) Anmeldetag: 16.09.2025
(51) Int. Cl.: H02J 7/00, H02J 7/34, H02J 50/10

(54) **SYSTEM AUS EINEM KOCHFELD ALS EXTERNE INDUKTIONSEINHEIT UND EINEM MOBILGERÄT**

(30) Priorität: 15.10.2024 LU 103413
(71) Anmelder: Miele & Cie. KG, 33332 Gütersloh (DE)
(72) Erfinder: Wilkens, Henrik, 49080 Osnabrück (DE); Ennen, Volker, Dr., 32257 Bünde (DE)

(57) **Zusammenfassung**

Die Erfindung betrifft ein System aus einem Kochfeld als externe Induktionseinheit (200) und einem Mobilgerät (100) mit einer Energieaufnahmeeinrichtung (115), wobei die Energieaufnahmeeinrichtung (115) zumindest eine Induktionsspule zum Aufnehmen von einer externen Induktionseinheit (200) ausgegebenen induktiven Energie umfasst, einem elektrischer Verbraucher (130), wobei der Verbraucher (130) dazu ausgebildet ist um eine Funktionalität des Mobilgeräts (100) auszuführen und einer Energiespeichereinheit (125), wobei die Energiespeichereinheit (125) dazu ausgeformt ist, um die von der Energieaufnahmeeinrichtung (115) aufgenommene Energie zu speichern und/oder Energie an den Verbraucher (130) abzugeben. Ferner umfasst das Mobilgerät (100) eine Steuereinheit (120), welche dazu ausgebildet ist um dem Verbraucher (130) für eine Umsetzung der Funktionalität des Mobilgeräts (100) eine Menge an Energie zuzuführen, wobei die Steuereinheit (120) ausgebildet ist, um ein Laden und/oder Entladen der Energiespeichereinheit (125) in Abhängigkeit der über die Energieaufnahmeeinrichtung (115) aufgenommen Energie und einer für die Funktionalität des Mobilgeräts (100) erforderlichen Energie anzusteuern.

## Beschreibung

Die Erfindung betrifft ein System aus einem Kochfeld als externe Induktionseinheit und einem Mobilgerät und ein Verfahren zum Betreiben eines Systems gemäß den Hauptansprüchen.

Oftmals wird bei einer Ansteuerung eines Mobilgerätes wie beispielsweise eines mobilen Zubereitungsgerätes für Speisen eine ineffiziente Verteilung einer zur Verfügung stehenden Energie vorgenommen. So erfolgt beispielsweise eine Begrenzung des Energieverbrauchs durch feste Grenzen (z. B. Schaltung von Heizkörpern in einer Art und Weise, dass eine Stromaufnahme von 16 A nicht überschritten wird). In klassischen Geräten wird die Prozesstechnik somit darauf ausgelegt eine feste Leistung (z. B. gegeben durch die Absicherung einer Steckdose) nicht zu überschreiten. Bei einer drahtlosen Energieübertragung sollte aber berücksichtigt werden, dass die Leistungsfähigkeit der Energieübertragung von vielen Einflüssen abhängt, die sich auch im laufenden Betrieb ändern können.

Der hier vorgestellte Ansatz stellt sich die Aufgabe, ein verbessertes Mobilgerät und ein verbessertes Verfahren zum Betreiben eines Mobilgeräts zu schaffen.

Erfindungsgemäß wird diese Aufgabe durch ein System aus einem Kochfeld als externe Induktionseinheit und einem Mobilgerät und ein Verfahren zum Betreiben eines Systems mit den Merkmalen der Hauptansprüche gelöst. Vorteilhafte Ausgestaltungen und Weiterbildungen der Erfindung ergeben sich aus den nachfolgenden Unteransprüchen.

Der mit der Erfindung erreichbare Vorteil besteht aus einer Berücksichtigung der Schwankung der Energiebereitstellung bei drahtloser Energieversorgung.

Mit dem hier vorgestellten Ansatz wird ein Mobilgerät mit folgenden Merkmalen vorgestellt:
einer Energieaufnahmeeinrichtung, wobei die Energieaufnahmeeinrichtung zumindest eine Induktionsspule zum Aufnehmen von einer externen Induktionseinheit ausgegebenen (beispielsweise induktiven) Energie umfasst;
einem elektrischer Verbraucher, wobei der Verbraucher dazu ausgebildet ist um eine Funktionalität des Mobilgeräts auszuführen;
einer Energiespeichereinheit, wobei die Energiespeichereinheit dazu ausgeformt ist, um die von der Energieaufnahmeeinrichtung aufgenommene Energie zu speichern und/oder Energie an den Verbraucher abzugeben;
einer Steuereinheit, welche dazu ausgebildet ist um dem Verbraucher für eine Umsetzung der Funktionalität des Mobilgeräts eine Menge an Energie zuzuführen, wobei die Steuereinheit ausgebildet ist, um ein Laden oder Entladen der Energiespeichereinheit in Abhängigkeit der über die Energieaufnahmeeinrichtung aufgenommen Energie und einer für die Funktionalität des Mobilgeräts erforderlichen Energie anzusteuern.

Das Mobilgerät kann gemäß einer Ausführungsform als ein Kleingerät, oder alternativ als ein Großgerät ausgeformt sein. Beispielsweise kann das Mobilgerät als Zubereitungsgerät zur Zubereitung von Speisen ausgebildet sein. Die Energieaufnahmeeinrichtung kann gemäß einer Ausführungsform als eine Spule ausgeformt sein, welche dazu ausgeformt ist, um ein Magnetfeld von der externen Induktionseinheit eine elektrische Spannung zu wandeln. Die Energieaufnahmeeinrichtung kann dabei gemäß einer Ausführungsform an einem Boden des Mobilgeräts angeordnet sein. Gemäß einer Ausführungsform kann der elektrische Verbraucher als eine Heizeinheit ausgeformt sein, wobei die Funktionalität des Verbrauchers als eine Erwärmung des Mobilgeräts ausgeführt werden kann. Gemäß einer alternativen Ausführungsform kann der Verbraucher auch einen Motor umfassen. Gemäß einer Ausführungsform kann die externe Induktionseinheit als eine Arbeitsplatte, oder als eine Kochplatte mit einem Induktionsfeld ausgeformt sein. Die Energiespeichereinheit kann als ein Akku ausgeformt sein. Gemäß einer alternativen Ausführungsform kann die Energiespeichereinheit auch als ein Kondensator ausgeformt sein. Die Steuereinheit kann gemäß einer Ausführungsform dazu ausgeformt sein um die Energie innerhalb des Mobilgerätes zu regulieren. Durch diese Ausführungsform kann eine Überlastung der Induktionsspule vermieden werden, und Schwankungen der Leistung entgegengewirkt werden.

Die Induktionseinheit ist ausgebildet Energie an ein Mobilgerät galvanisch getrennt zu übertragen. Die Induktionseinheit kann beispielsweise als eine Induktionsspule eines Kochfeldes sein, welche zum ausgegebenen induktiver Energie ausgebildet ist.

Die Steuereinheit kann dazu ausgebildet sein, um Energie aus der Energiespeichereinheit an den Verbraucher zu übertragen, wenn die für die Funktionalität benötigte Energie größer ist, als die über die Energieaufnahmeeinrichtung aufgenommene Energie. Gemäß dieser Ausführungsform können Leistungsschwankungen ausgeglichen werden.

Die Steuereinheit kann zudem dazu ausgebildet sein, um ein Anforderungssignal zur Erhöhung der von der externen Induktionseinheit ausgegebenen Energie and die externe Induktionseinheit auszusenden, insbesondere wenn die für die Funktionalität benötigte Energie größer ist, als die über die Energieaufnahmeeinrichtung aufgenommene Energie. Dadurch kann vermieden werden, dass die Funktionalität abgebrochen wird.

Die Steuereinheit kann ausgebildet sein, um den Verbraucher derart anzusteuern, dass er die Funktionalität mit einem geringeren Energieverbrauch ausführt, insbesondere wenn die für die Funktionalität benötigte Energie größerer ist, als die über die Energieaufnahmeeinrichtung aufgenommene Energie. Dies ist eine besonders vorteilhafte Ausführung, da somit eine nachhaltiger Energieverbrauch ermöglicht werden, wobei auch ermöglicht werden kann, die Funktionalität überhaupt, wenn auch mit einer geringeren Intensität oder Wirksamkeit ausführen zu können. Beispielsweise kann ein Heizelement oder ein Elektromotor als Verbraucher mit einer geringeren Leistung angesteuert werden, sodass das Heizelement weniger Heizenergie abgibt oder der Elektromotor weniger mechanische Leistung abgibt.

Die Steuereinheit kann so ausgebildet sein, um Energie in die Energiespeichereinheit zu übertragen, wenn die für die Funktionalität benötigte Energie geringer ist, als die über die Energieaufnahmeeinrichtung aufgenommene Energie. Damit kann für eine Situation in der mehr Energie benötigt wird vorgesorgt werden, ohne die Funktionalität signifikant einzuschränken.

Die Steuereinheit kann ausgebildet sein, um die Energiespeichereinheit nicht unter einen Soll-Energiespeicherzustand zu entladen, oder nur während einem aktiven Zustand des Mobilgeräts zu laden, oder innerhalb eines Toleranzbereichs vor einer Ausführung der Funktionalität zu laden. Durch die verschiedenen Lade- bzw. Entlademöglichkeiten kann einer verringerten Leistungsfähigkeit des Mobilgerätes entgegengewirkt werden, wobei der vorgesehene Betrieb oder die Funktionalität des Mobilgerätes zumindest in gewissen Grenzen sichergestellt werden kann.

Das Mobilgerät kann einen weiteren elektrischen Verbraucher umfassen, wobei der weitere Verbraucher dazu ausgebildet ist um eine weitere Funktionalität des Mobilgeräts auszuführen, wobei die Steuereinheit ausgebildet ist um dem weiteren Verbraucher für eine Umsetzung der weiteren Funktionalität des Mobilgeräts eine Menge an Energie zuzuführen, wobei die Steuereinheit ausgebildet ist, um ein Laden oder Entladen der Energiespeichereinheit in Abhängigkeit und einer für die weitere Funktionalität des Mobilgeräts erforderlichen Energie anzusteuern. Der weitere elektrische Verbraucher kann gemäß einer Ausführungsform ebenfalls als ein Motor ausgeformt sein. Gemäß einer alternativen Ausführungsform kann der weitere elektrische Verbraucher auch als eine Heizeinheit ausgeformt sein. Die weitere Funktionalität kann gemäß einer Ausführungsform eine Mixfunktion ausführen.

Die Steuereinheit kann ausgebildet sein, um den weiteren Verbraucher derart anzusteuern, dass er die weitere Funktionalität mit einem geringeren Energieverbrauch ausführt, insbesondere wenn die für die Funktionalität von dem Verbraucher, benötigte Energie größer ist, als die über die Energieaufnahmeeinrichtung aufgenommene Energie. Hierdurch kann sichergestellt werden, dass zumindest eine Funktionalität zuverlässig umgesetzt werden kann.

Ferner wird ein Mobilgerät mit einer mit der Steuereinheit gekoppelten Nutzerschnittstelle vorgestellt, wobei die Nutzerschnittstelle ausgebildet ist, um eine Ausführung der Funktionalität des Mobilgerätes zu sperren, wenn die für die Funktionalität oder die weitere Funktionalität benötigte Energie größer ist, als die über die Energieaufnahmeeinrichtung aufgenommene Energie, oder um eine Positionierungsanweisung zur Neupositionierung des Mobilgeräts im Bereich der externen Induktionseinheit auszugeben, insbesondere wenn die für die Funktionalität oder die weitere Funktionalität benötigte Energie größer ist, als die über die Energieaufnahmeeinrichtung aufgenommene Energie oder wenn eine von der Energieaufnahmeeinrichtung empfangene Energie nicht einem Soll-Wert entspricht. Die Nutzerschnittstelle kann gemäß einer Ausführungsform als ein Eingabefeld mit Display ausgeformt sein. Die Neupositionierungsanweisung kann gemäß einer Ausführungsform als ein Symbol auf der Nutzerschnittstelle angezeigt werden. Gemäß einer alternativen Ausführungsform kann die Neupositionierungsanweisung auch als ein Text auf dem Display angezeigt werden. eine solche Ausführungsform bietet den Vorteil einer präzisen Steuer- oder Bedienmöglichkeit durch den Nutzer, wenn für einen zuverlässigen Betrieb oder eine zuverlässige Funktionalität des Mobilgerätes beispielsweise nicht ausreichend Energie zu Verfügung gestellt werden kann.

Der Verbraucher des Mobilgeräts kann als ein Elektromotor oder ein Heizelement ausgeformt sein, und der weitere Verbraucher kann als ein Elektromotor oder ein Heizelement ausgeformt sein.

Es wird weiterhin ein Verfahren zum Betreiben eines Mobilgeräts vorgestellt, wobei das Verfahren einen Schritt des Aufnehmens von Energie mittels der Energieaufnahmeeinrichtung, und einen Schritt des Ansteuerns umfasst, wobei der Schritt des Ansteuerns eine Zuführung einer für die Umsetzung der Funktionalität des Mobilgerätes erforderlichen Energie an den Verbraucher ausführt, wobei ein Laden oder Entladen der Energiespeichereinheit in Abhängigkeit der über die Energieaufnahmeeinrichtung aufgenommen Energie und der für die Funktionalität des Mobilgeräts erforderlichen Energie angesteuert wird. Gemäß einer Ausführungsform kann das Mobilgerät zum Ausführen des Schritts des Aufnehmens eine Zuführungseinheit, und für den Schritt des Ansteuerns eine Ansteuereinheit, umfassen. Gemäß einer Ausführungsform können die Zuführungseinheit und die Ansteuereinheit in der Steuereinheit umfasst sein. Auch durch eine solche Ausführungsform können die Vorteile des hier vorgestellten Ansatzes effizient umgesetzt werden.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern beziehungsweise umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgerät beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Mobilgeräts;
- Figur 2: eine schematische Darstellung eines Ausführungsbeispiels eines Mobilgeräts auf einer Induktionseinheit; und
- Figur 3: ein Ablaufdiagramm eines Ausführungsbeispiel eines Verfahrens zum Betreiben eines Mobilgeräts.

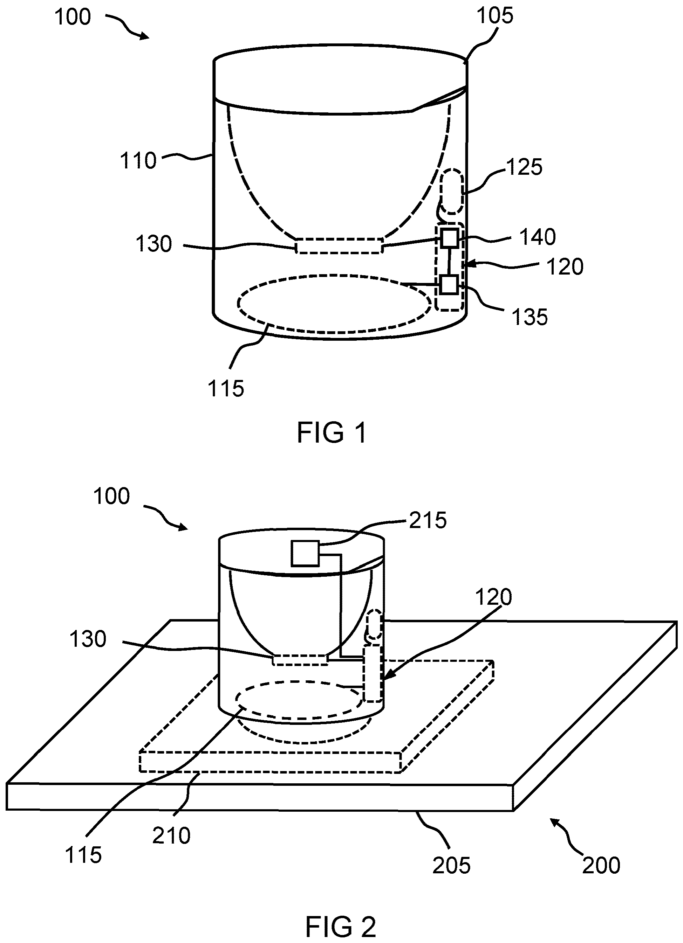

Figur 1 zeigt eine schematische Darstellung eines Ausführungsbeispiels eines Mobilgeräts 100. Das Mobilgerät 100 umfasst hier einen Deckel 105 und ein Gefäß 110. Dabei umfasst das Gefäß 110 eine Energieaufnahmeeinrichtung 115, welche mit einer Steuereinheit 120 verbunden ist. Die Steuereinheit 120 ist mit einer Energiespeichereinheit 125 und einem elektrischen Verbraucher 130 verbunden. Dabei umfasst die Steuereinheit 120 eine Zuführungseinheit 135 und eine Ansteuereinheit 140.

Gemäß einem Ausführungsbeispiel ist das Mobilgerät 100 als ein Kleingerät ausgeformt. Alternativ ist das Mobilgerät 100 als ein Großgerät ausgeführt. Der Deckel 105 ist gemäß einem Ausführungsbeispiel dazu ausgeformt um das Gefäß 110 geöffnet oder geschlossen zu halten. Dabei ist das Gefäß 110 gemäß einem Ausführungsbeispiel als eine Aufnahmeeinheit ausgeformt. Beispielsweise ist das Gefäß 110 ausgeformt um Lebensmittel, oder Materialien darin aufzunehmen. Gemäß einem Ausführungsbeispiel ist die Energieaufnahmeeinrichtung 115 als zumindest eine Induktionsspule ausgeformt, und beispielsweise zum Aufnehmen von einer externen Induktionseinheit (beispielsweise einer Induktionsspule eines Kochfeldes) ausgegebenen induktiven Energie ausgebildet. Gemäß einem alternativen Ausführungsbeispiel umfasst die Energieaufnahmeeinrichtung 115 mehrere Induktionsspulen. Die Energieaufnahmeeinrichtung 115 ist gemäß einem Ausführungsbeispiel dazu ausgeformt um Energie an den elektrischen Verbraucher 130 zu übertragen. Der elektrische Verbraucher 130 ist gemäß einem Ausführungsbeispiel dazu ausgebildet um eine Funktionalität des Mobilgeräts 100 auszuführen. Gemäß einem Ausführungsbeispiel ist der Verbraucher 130 dabei als eine Heizeinheit ausgeformt, um das Mobilgerät 100 beispielsweise zum Erhitzen von Lebensmitteln, oder zum Schmelzen von Materialien in dem Gefäß 110 zu erhitzen. Gemäß einem alternativen Ausführungsbeispiel ist der Verbraucher 130 auch als ein Motor ausgeformt sein, beispielsweise um ein Lebensmittel in dem Gefäß 110 umzurühren. Wenn der Verbraucher 130 mehr Energie benötigt als die Energieaufnahmeeinrichtung 115 bereitstellt, greift der Verbraucher 130 auf eine Energie aus der Energiespeichereinheit 125 zurück, gesteuert durch die Steuereinheit 120. Die Energiespeichereinheit 125 ist gemäß einem Ausführungsbeispiel dazu ausgeformt, um die von der Energieaufnahmeeinrichtung 115 aufgenommene Energie zu speichern und Energie an den Verbraucher 130 abzugeben. Die Energiespeichereinheit 125 ist dabei gemäß einem Ausführungsbeispiel als ein Akku ausgeformt. Alternativ ist die Energiespeichereinheit 125 auch als ein Kondensator ausgeformt.

Die Energieaufnahme und Energieabgabe der Energiespeichereinheit 125 werden dabei von der Steuereinheit 120 reguliert. Die Steuereinheit 120 ist gemäß einem Ausführungsbeispiel dazu ausgebildet, um dem Verbraucher 130 für eine Umsetzung der Funktionalität des Mobilgeräts 100 eine Menge an Energie zuzuführen, wobei die Steuereinheit 120 ausgebildet ist, um ein Laden und Entladen der Energiespeichereinheit 125 in Abhängigkeit der über die Energieaufnahmeeinrichtung 115 aufgenommen Energie und einer für die Funktionalität des Mobilgeräts 100 erforderlichen Energie anzusteuern. Gemäß einem Ausführungsbeispiel ist die Steuereinheit 120 für die Energieversorgung des Mobilgeräts 100 zuständig, wobei die Steuereinheit 120 die Energie aller mit Energie zu versorgenden Einheiten reguliert.

Gemäß einem Ausführungsbeispiel umfasst die Steuereinheit 120 dabei die Zuführungseinheit 135 und die Ansteuereinheit 140. Die Zuführungseinheit 135 ist gemäß einem Ausführungsbeispiel dazu ausgeformt, um aufgenommene Energie der Steuereinheit 120 zuzuführen. Gemäß einem Ausführungsbeispiel ist die Ansteuereinheit 140 dazu ausgeformt Energie an die verschiedenen Einheiten, beispielsweise den Verbraucher 130 oder die Energiespeichereinrichtung 125, zu übertragen. Gemäß einem Ausführungsbeispiel ist die Steuereinheit 120 dazu ausgeformt, um zusammen mit der Zuführungseinrichtung und der Ansteuereinheit 140, ein Energiemanagement für Geräte auszuführen. Um die schwankende Leistungsfähigkeit der Energiebereitstellung zu berücksichtigen, muss das Energiemanagement an die Leistungsfähigkeit der Energieübertragung angepasst werden.

Gemäß einem Ausführungsbeispiel ist die Steuereinheit 120 dazu ausgeformt, um eine Begrenzung des Anlaufstroms des Mobilgeräts 100 auf einen bestimmten Wert auszuführen, um eine Überlastung der Energieübertragung zu verhindern. Gegebenenfalls findet dabei eine Übertragung des Grenzwertes vom Transmitter an den Receiver statt. Dafür umfasst das Mobilgerät 100 beispielsweise einen Akkupuffer mit automatischer Nachladung und gegebenenfalls mit einem Energiemanagement zur Begrenzung der Energieaufnahme. Gemäß einem Ausführungsbeispiel wird Energie aus der Energiespeichereinheit 125 an den Verbraucher 130 übertragen, wenn die für die Funktionalität benötigte Energie größer ist, als die über die Energieaufnahmeeinrichtung 115 aufgenommene Energie. Außerdem wird beispielsweise ein Anforderungssignal zur Erhöhung der von der externen Induktionseinheit ausgegebenen Energie angefordert, wenn die benötigte Energie des Mobilgeräts 100, die gespeicherte, beziehungsweise die verfügbare Energie übersteigt. Alternativ wird die Funktionalität mit einem geringeren Energieverbrauch ausgeführt.

Gemäß einem Ausführungsbeispiel ist die Steuereinheit 120 ausgebildet, um Energie in die Energiespeichereinheit 125 zu übertragen, wenn die für die Funktionalität benötigte Energie geringer ist, als die über die Energieaufnahmeeinrichtung 115 aufgenommene Energie. Dabei soll die Energiespeichereinheit 125 nicht unter einen Soll-Energiespeicherzustand entladen werden. Dafür weist die Energiespeichereinheit 125 verschiedene Ladevorgänge auf. Gemäß einem Ausführungsbeispiel wird die Energiespeichereinheit 125 nur während einem aktiven Zustand des Mobilgeräts 100 geladen. Gemäß einem alternativen Ausführungsbeispiel wird die Energiespeichereinheit 125 innerhalb eines Toleranzbereichs vor einer Ausführung der Funktionalität geladen, um somit gezielt gegen Leistungsspitzen vorzugehen.

Kurzzeitige Spitzenlasten können durch die Energiespeichereinheit 125, auch Speicherelement genannt, ausgeglichen werden. Dabei kann es sich zum Beispiel um einen Akku oder einen Kondensator oder eine ähnliche Einrichtung zur Speicherung von elektrischer Energie handeln. Das Speicherelement kann gemäß einem Ausführungsbeispiel entweder dauerhaft wenigstens teilweise geladen gehalten werden oder nur während des Betriebs des Geräts oder nur kurzzeitig vor einer Aktion mit temporär hohem Energiebedarf geladen werden. Wenn der Ist-Ladezustand unter dem Soll-Ladezustand liegt und der aktuelle Leistungsbedarf des Geräts unter der aktuell maximal vom Energie bereitstellenden Gerät, auch als Induktionseinheit 200 bezeichnet, verfügbaren Leistung liegt, ruft das Mobilgerät 100, gemäß diesem Ausführungsbeispiel als Kleingerät ausgeformt und auch als solches bezeichnet, bei dem Energie bereitstellenden Gerät eine im Vergleich zum aktuell verwendeten Leistung erhöhten Energietransfer ab. Der Differenzbetrag wird verwendet, um das Speicherelement zu laden. Im Fall eines nur anlassbezogen geladenen Energiespeichers, der Energiespeichereinheit 125, kann dies beispielsweise vor einer Aktivität mit erhöhtem Energiebedarf erfolgen. Andernfalls kann eine kontinuierliche oder regelmäßige oder anlassbezogene Überprüfung des Ladezustands oder der Möglichkeit der Verbesserung des Ladezustands erfolgen. Alternativ zu einer Speicherung von Energie für die Abdeckung von Lastspitzen kann das Auftreten von Lastspitzen, welche die Leistungsfähigkeit der Energieübertragungseinheit überfordern, verhindert und vermindert werden.

Gemäß einem Ausführungsbeispiel umfasst das Mobilgerät 100 einen weiteren elektrischen Verbraucher, wobei der weitere Verbraucher dazu ausgebildet ist um eine weitere Funktionalität des Mobilgeräts 100 auszuführen, wobei die Steuereinheit 120 ausgebildet ist um dem weiteren Verbraucher für eine Umsetzung der weiteren Funktionalität des Mobilgeräts 100 eine Menge an Energie zuzuführen, wobei die Steuereinheit 120 ausgebildet ist, um ein Laden und Entladen der Energiespeichereinheit 125 in Abhängigkeit und einer für die weitere Funktionalität des Mobilgeräts 100 erforderlichen Energie anzusteuern. Durch den weiteren elektrischen Verbraucher, ist das Mobilgerät 100 in der Lage unterschiedliche Funktionen hintereinander, oder zeitgleich auszuführen. Gemäß einem Ausführungsbeispiel wird der weitere Verbraucher dabei derart angesteuert, sodass er die weitere Funktionalität mit einem geringeren Energieverbrauch ausführt, insbesondere wenn die für die Funktionalität benötigte Energie größer ist, als die über die Energieaufnahmeeinrichtung 115 aufgenommene Energie. Gemäß einem Ausführungsbeispiel ist der Verbraucher 130 als ein Elektromotor ausgeformt, und der weitere Verbraucher ist als ein Heizelement ausgeformt.

Gemäß einem alternativen Ausführungsbeispiel ist der Verbraucher 130 als ein Heizelement, und der weitere Verbraucher ist als ein Elektromotor ausgeformt.

Figur 2 zeigt eine schematische Darstellung eines Ausführungsbeispiels eines Mobilgeräts 100 auf einer Induktionseinheit 200. Das Mobilgerät 100 ist gemäß einem Ausführungsbeispiel wie das in Figur 1 beschriebene Mobilgerät ausgeformt. Die Induktionseinheit 200 umfasst eine Arbeitsplatte 205 und ein Induktionsfeld 210 als externe Induktionseinheit.

Gemäß einem Ausführungsbeispiel ist die externe Induktionseinheit 200 dazu ausgebildet, um das Mobilgerät 100 mit Energie zu versorgen. Die Induktionseinheit 200 ist gemäß einem Ausführungsbeispiel als ein Kochfeld ausgeformt. Gemäß einem alternativen Ausführungsbeispiel ist die Induktionseinheit 200 auch als eine Werkbank ausgeformt. Die Induktionseinheit 200 umfasst hierbei die Arbeitsplatte 205, welche gemäß einem Ausführungsbeispiel als ein Glaskeramikfeld ausgeformt ist. Gemäß einem alternativen Ausführungsbeispiel ist die Arbeitsplatte 205 auch als eine Holzplatte ausgeformt. Dabei umfasst die Arbeitsplatte 205 das Induktionsfeld 210. Gemäß einem Ausführungsbeispiel ist das Induktionsfeld 210 als eine Energie-bereitstellende Spule mit Steuer- und Leistungselektronik, beispielsweise einem Transmitter, ausgeformt, und unter der Arbeitsplatte 205 angeordnet. Gemäß einem Ausführungsbeispiel umfasst das Induktionsfeld 210 eine Induktionsspule, welche ein Magnetfeld generiert. Das Magnetfeld wird gemäß einem Ausführungsbeispiel von der Induktionsspule der Energieaufnahmeeinrichtung 115 in eine elektrische Spannung umgewandelt.

Die Leistungsfähigkeit einer drahtlosen Energieversorgung mittels Induktion kann durch äußere Einflüsse schwanken. Dies muss bei der Prozesstechnik und gegebenenfalls dem Aufbau der Geräteelektronik berücksichtigt werden. In klassischen Geräten wird die Prozesstechnik darauf ausgelegt eine feste Leistung, welche beispielsweise durch die Absicherung einer Steckdose gegeben ist, nicht zu überschreiten. Bei einer drahtlosen Energieübertragung muss aber berücksichtigt werden, dass die Leistungsfähigkeit der Energieübertragung von vielen Einflüssen abhängt, die sich auch im laufenden Betrieb ändern können. Dabei kann es sich zum Beispiel um die Positionierung der Receiver-Spule des Kleingeräts relativ zu der Transmitter Spule des Energie bereitstellenden Geräts handeln.

Gemäß einem Ausführungsbeispiel umfasst das Mobilgerät 100 eine mit der Steuereinheit 120 gekoppelte Nutzerschnittstelle 215, wobei die Nutzerschnittstelle 215 ausgebildet ist, um eine Ausführung der Funktionalität des Mobilgerätes 100 zu sperren, wenn die für die Funktionalität oder die weitere Funktionalität benötigte Energie größer ist, als die über die Energieaufnahmeeinrichtung 115 aufgenommene Energie. Gemäß einem Ausführungsbeispiel ist die Nutzerschnittstelle 215 auch dazu ausgebildet, um eine Positionierungsanweisung zur Neupositionierung des Mobilgeräts 100 im Bereich der externen Induktionseinheit 200 auszugeben, wenn die benötigte Energie die aufgenommene Energie übersteigt. Beispielsweise wird die Positionierungsanweisung ausgegeben um einen Nutzer darauf hinzuweisen, dass die niedrige Energieaufnahme durch eine ungenaue Positionierung der Induktionsspule des Mobilgeräts 100, in Bezug auf die Induktionsspule der Induktionseinheit 200 entstanden ist. Dabei muss berücksichtigt werden, dass die Leistungsfähigkeit der Energieübertragung von vielen Einflüssen abhängt, die sich auch im laufenden Betrieb ändern können. Dabei kann es sich zum Beispiel um die Positionierung der Receiver-Spule des Kleingeräts relativ zu der Transmitter Spule des Energie bereitstellenden Geräts handeln. Um dies zu berücksichtigen, muss das Energiemanagement an die Leistungsfähigkeit der Energieübertragung angepasst werden.

Die Leistungsfähigkeit einer induktiven Energieübertragung ist begrenzt. Daher kann es vorkommen, dass ein für einen Prozess in einem drahtlos mit Energie versorgten Kleingerät wünschenswerte Leistung nicht verfügbar ist. Im Gegensatz zu einer drahtgebundenen Energieversorgung, welche zum Beispiel über die Absicherung einer Steckdose eine im Wesentlichen konstante Begrenzung der Leistungsfähigkeit besitzt, kann die Leistungsfähigkeit der drahtlosen Energieversorgung zeitlichen Schwankungen unterliegen. Daher ist es nicht ausreichend, die den internen Verbrauchern, zum Beispiel Heizkörper, Motoren, oder Elektroniken zugeteilte Leistung analog zu klassischen Geräten mit einer kabelgebundenen Energieversorgung auf eine feste Maximalleistung auszulegen. Die Prozesse müssen auf schwankende Leistungsverfügbarkeit ausgelegt sein oder Gegenmaßnahmen zur Abmilderung der Auswirkungen einer schwankenden Energieverfügbarkeit getroffen werden.

Gemäß einem Ausführungsbeispiel bestimmen das mobile Kleingerät und das Energie bereitstellende Gerät die maximal übertragbare Leistung X, beziehungsweise eine damit zusammenhängende Größe. Das Kleingerät bzw. Mobilgerät 100 legt in Anlehnung an diesen Wert einen maximalen Gesamtverbrauch Y oder maximalen Verbrauch Z1, Z2 für bestimmte Teilfunktionen, zum Beispiel für einen Motor oder ein Heizelement als Verbraucher, fest. Das Kleingerät fordert bei dem Energie bereitstellenden Gerät bzw. der externen Induktionseinheit in Abhängigkeit von den Anforderungen des jeweiligen Betriebsmodus Leistungen bis maximal Y an. Wenn sich die maximal übertragbare Leistung X zum Beispiel durch eine Verschiebung des Kleingeräts verändert, wird auch der für das geräteinterne Powermanagement genutzte maximale Gesamtverbrauch Y beziehungsweise die maximalen Verbrauchswerte Z1, Z2 der Teilfunktionen entsprechend zu Y' beziehungsweise Z1', Z2' angepasst.

Prozesse mit einer besonders hohen Leistungsbedarf, zum Beispiel Anlaufströme mancher Motoren, können durch eine angepasste Ansteuerung der Motoren reduziert werden. Dabei kann die Auslegung der Ansteuerung von dem aktuell gültigen Maximalwerten abhängig sein. Der Verbraucher 130 und der weitere Verbraucher, deren Wirkungsweise eine kurzfristige Deaktivierung oder Leistungsreduktion erlaubt, können gemäß einem Ausführungsbeispiel kurzzeitig deaktiviert oder in der Leistungsaufnahme reduziert werden. Beispielsweise durch ein kurzzeitiges Abschalten eines Heizkörpers während des Betriebs eines Motors. Aufgrund der Trägheit der Wärmeabgabe eines typischen Heizkörpers wird ein kurzzeitiges Abschalten keinen wesentlichen Einfluss auf den Erfolg des laufenden Prozesses haben.

Wenn ein drahtlos mit Energie versorgtes Kleingerät verschiedene Funktionen realisieren kann und für die verschiedenen Funktionen unterschiedliche Leistung benötigt wird, kann dem Nutzer an der Nutzerschnittstelle 215 des Geräts in Abhängigkeit von der verfügbaren Leistung nur ein Teil dieser Leistungen angeboten werden. So kann zum Beispiel ein Nahrungsmittelzubereitungsgerät mit einer Booster-Aufheizfunktion diese bei einer guten Energieversorgung anbieten und im Falle einer schlechteren Energieversorgung deaktivieren. Dies kann dem Nutzer zum Beispiel durch ein ausgegrautes Symbol in einem Display angezeigt werden. Ein Versuch des Nutzers, die Funktion zu nutzen kann zu einem Hinweis für eine Verbesserung der Energieversorgung führen, beispielsweise durch eine mittige Positionierung des Kleingeräts auf einer für die Energieübertragung ausgewiesenen Fläche.

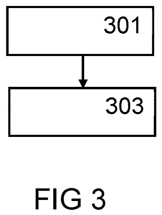

Figur 3 zeigt ein Ablaufdiagramm eines Ausführungsbeispiel eines Verfahrens 300 zum Betreiben eines Mobilgeräts. Dabei umfasst das Verfahren 300 einen Schritt des Aufnehmens von Energie mittels der Energieaufnahmeeinrichtung. Ferner umfasst das Verfahren 300 einen Schritt des Ansteuerns einer Zuführung einer für die Umsetzung der Funktionalität des Mobilgerätes erforderlichen Energie an den Verbraucher, wobei ein Laden und Entladen der Energiespeichereinheit in Abhängigkeit der über die Energieaufnahmeeinrichtung aufgenommen Energie und der für die Funktionalität des Mobilgeräts erforderlichen Energie angesteuert wird.

## Patentansprüche

1. System aus einem Kochfeld als externe Induktionseinheit (200) und einem Mobilgerät (100) mit folgenden Merkmalen:
das Mobilgerät (100) hat eine Energieaufnahmeeinrichtung (115), welche zumindest eine Induktionsspule zum Aufnehmen von einer externen Induktionseinheit (200) ausgegebenen Energie umfasst;
das Mobilgerät (100) hat einen elektrischer Verbraucher (130), welcher dazu ausgebildet ist um eine Funktionalität des Mobilgeräts (100) auszuführen;
das Mobilgerät (100) hat eine Energiespeichereinheit (125), welche dazu ausgeformt ist, um die von der Energieaufnahmeeinrichtung (115) aufgenommene Energie zu speichern und/oder Energie an den Verbraucher (130) abzugeben;
das Mobilgerät (100) hat eine Steuereinheit (120), welche dazu ausgebildet ist,
um dem Verbraucher (130) für eine Umsetzung der Funktionalität des Mobilgeräts (100) eine Menge an Energie zuzuführen und/oder
um ein Laden und/oder Entladen der Energiespeichereinheit (125) in Abhängigkeit der über die Energieaufnahmeeinrichtung (115) aufgenommen Energie und einer für die Funktionalität des Mobilgeräts (100) erforderlichen Menge an Energie anzusteuern.

2. System gemäß Anspruch 1, wobei die Steuereinheit (120) ausgebildet ist, um Energie aus der Energiespeichereinheit (125) an den Verbraucher (130) zu übertragen, wenn die für die Funktionalität benötigte Energie größer ist, als die über die Energieaufnahmeeinrichtung (115) aufgenommene Energie.

3. System gemäß einem der Ansprüche 1 oder 2, wobei die Steuereinheit (120) ausgebildet ist, um ein Anforderungssignal zur Erhöhung der von der externen Induktionseinheit (200) ausgegebenen Energie and die externe Induktionseinheit (200) auszusenden, insbesondere wenn die für die Funktionalität benötigte Energie größer ist, als die über die Energieaufnahmeeinrichtung (115) aufgenommene Energie.

4. System gemäß einem der vorangegangenen Ansprüche, wobei die Steuereinheit (120) ausgebildet ist, um den Verbraucher (130) derart anzusteuern, dass er die Funktionalität mit einem geringeren Energieverbrauch ausführt, insbesondere wenn die für die Funktionalität benötigte Energie größerer ist, als die über die Energieaufnahmeeinrichtung (115) aufgenommene Energie.

5. System gemäß einem der vorangegangenen Ansprüche, wobei die Steuereinheit (120) ausgebildet ist, um Energie in die Energiespeichereinheit (125) zu übertragen, wenn die für die Funktionalität benötigte Energie geringer ist, als die über die Energieaufnahmeeinrichtung (115) aufgenommene Energie.

6. System gemäß einem der vorangegangenen Ansprüche, wobei die Steuereinheit (120) ausgebildet ist, um die Energiespeichereinheit (125) nicht unter einen Soll-Energiespeicherzustand zu entladen und/oder nur während einem aktiven Zustand des Mobilgeräts (100) zu laden und/oder innerhalb eines zeitlichen Toleranzbereichs vor einer Ausführung der Funktionalität zu laden.

7. System gemäß einem der vorangegangenen Ansprüche, mit einem weiteren elektrischen Verbraucher, wobei der weitere Verbraucher dazu ausgebildet ist um eine weitere Funktionalität des Mobilgeräts (100) auszuführen, wobei die Steuereinheit (120) ausgebildet ist um dem weiteren Verbraucher für eine Umsetzung der weiteren Funktionalität des Mobilgeräts (100) eine Menge an Energie zuzuführen, wobei die Steuereinheit (120) ausgebildet ist, um ein Laden und/oder Entladen der Energiespeichereinheit (125) in Abhängigkeit und einer für die weitere Funktionalität des Mobilgeräts (100) erforderlichen Energie anzusteuern.

8. System gemäß dem vorangegangenen Anspruch, wobei die Steuereinheit (120) ausgebildet ist, um den weiteren Verbraucher derart anzusteuern, dass er die weitere Funktionalität mit einem geringeren Energieverbrauch ausführt, insbesondere wenn die für die Funktionalität benötigte Energie größer ist, als die über die Energieaufnahmeeinrichtung (115) aufgenommene Energie.

9. System gemäß einem der vorangegangen Ansprüche, mit einer mit der Steuereinheit (120) gekoppelten Nutzerschnittstelle (215), wobei die Nutzerschnittstelle (215) ausgebildet ist,
um eine Ausführung der Funktionalität des Mobilgerätes (100) zu sperren, wenn die für die Funktionalität und/oder die weitere Funktionalität benötigte Energie größer ist, als die über die Energieaufnahmeeinrichtung (115) aufgenommene Energie,
und/oder
um eine Positionierungsanweisung zur Neupositionierung des Mobilgeräts (100) im Bereich der externen Induktionseinheit (200) auszugeben, insbesondere wenn die für die Funktionalität und/oder die weitere Funktionalität benötigte Energie größer ist, als die über die Energieaufnahmeeinrichtung (115) aufgenommene Energie und/oder wenn eine von der Energieaufnahmeeinrichtung (115) empfangene Energie nicht einem Soll-Wert entspricht.

10. System gemäß einem der vorangegangenen Ansprüche, wobei der Verbraucher (130) als ein Elektromotor und/oder ein Heizelement ausgeformt ist, und/oder der weitere Verbraucher als ein Elektromotor und/oder ein Heizelement ausgeformt ist.

11. Verfahren (300) zum Betreiben eines Systems gemäß einem der vorangegangenen Ansprüche, wobei das Verfahren (300) folgende Schritte umfasst:
Aufnahme (301) von Energie mittels der Energieaufnahmeeinrichtung (115); und
Ansteuern (303) einer Zuführung einer für die Umsetzung der Funktionalität des Mobilgerätes (100) erforderlichen Energie an den Verbraucher (130), wobei ein Laden und/oder Entladen der Energiespeichereinheit (125) in Abhängigkeit der über die Energieaufnahmeeinrichtung (115) aufgenommen Energie und der für die Funktionalität des Mobilgeräts (100) erforderlichen Energie angesteuert wird.

12. Steuereinheit (120), die ausgebildet ist, um die Schritte des Verfahrens (300) nach dem vorangegangenen Anspruch in entsprechenden Einheiten (135, 140) auszuführen und/oder anzusteuern.
